# FASCICULE DE BREVET EUROPEEN

(11) **EP 3 022 867 B1**
(45) Date de publication et mention de la délivrance du brevet: **11.03.2020**
(21) Numéro de dépôt: 14758587.1
(22) Date de dépôt: 30.06.2014
(51) Int. Cl.: H04L 9/32, G06F 21/34, H04L 9/16

(54) **PROCÉDE D'AUTHENTIFICATION FORTE**
STRENGES AUTHENTIFIZIERUNGSVERFAHREN
STRONG AUTHENTICATION METHOD

(30) Priorité: 19.07.2013 FR 1357116
(43) Date de publication de la demande: 25.05.2016
(73) Titulaire: In-Webo Technologies, 75009 Paris (FR)
(72) Inventeur: PERROT, Didier, F-75009 Paris (FR)
(74) Mandataire: Novagraaf Technologies
(86) Numéro de dépôt international: PCT/FR2014/000161
(87) Numéro de publication internationale: WO 2015/007958

(56) Documents cités:
- EP-A2- 2 339 497
- WO-A1-02/17556
- WO-A2-2006/100655
- FR-A1- 2 937 204
- "Chapter 10: Identification and Entity Authentication ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 385 - 424 , 1 octobre 1996 (1996-10-01), XP001525010, ISBN: 978-0-8493-8523-0 Extrait de l'Internet: URL:http://www.cacr.math.uwaterloo.ca/hac/
- "Chapter 12: Key Establishment Protocols ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541 , 1 octobre 1996 (1996-10-01), XP001525012, ISBN: 978-0-8493-8523-0 Extrait de l'Internet: URL:http://www.cacr.math.uwaterloo.ca/hac/

## Description

### Domaine technique

La présente invention concerne un procédé d'authentification et un produit programme d'ordinateur mettant en oeuvre ce procédé pour sécuriser l'accès à des services et la réalisation de transactions sur un réseau de données comme internet.

### Etat de la technique

Avec la multiplication des services accessibles, notamment pour le Grand Public, l'authentification par mot de passe n'assure plus un niveau de protection approprié dans des domaines comme le paiement en ligne, la réalisation de transactions de banque à distance, ou l'accès à des informations à caractère privé et/ou confidentiel comme c'est le cas pour des applications de santé ou le système d'information des entreprises. Des mots de passe trop simples, la négligence des utilisateurs, leur tendance à réutiliser des mots de passe similaires ou identiques pour de nombreux services, ainsi que le faible niveau de protection des bases de données de mots de passe et l'amélioration des algorithmes de « crackage » des mots de passe concourent à chercher des alternatives plus sécurisées. De nombreuses solutions ont été proposées dans ce sens.

Les solutions consistant à « randomisera » le mot de passe ou sa saisie (script, utilisation du mot de passe comme un masque), ou simplement à sécuriser sa transmission (https) ne sont d'aucune aide contre la plupart des vulnérabilités évoquées ci-dessus. L'envoi de mots de passe dynamiques par SMS ou le rappel (« call-back ») sur un numéro de téléphone préenregistré ont été vus comme une solution, mais ont été mis en défaut à très grande échelle par des malwares diffusés sur les téléphones et par des attaques « sociales » sur les bases de données contenant les numéros de téléphone.

A l'opposé du spectre des solutions, l'authentification « multi-facteurs » s'appuyant sur un dispositif matériel (carte à puce protégeant une clé portant une partie de l'identité, carte à puce contenant une empreinte biométrique comparée *dans la carte* à celle de l'utilisateur) apportent un niveau de sécurité fortement accru, au prix cependant de coûts importants (équipements, distribution et enrôlement, gestion de parc) et d'une complexité ou d'une impossibilité de mise en oeuvre à grande échelle et/ou sur des terminaux utilisateurs hétérogènes.

Pour pallier ces inconvénients qui sont autant d'obstacles à une diffusion et une utilisation massives, des solutions d'authentification multi-facteurs entièrement logicielles ont été proposées (App mobiles, clients d'authentification, certificats logiciels), présentant cependant un niveau de sécurité très réduit - et en pratique similaire à celui d'un simple mot de passe - du fait de l'impossibilité de protéger correctement en confidentialité la clé ou l'empreinte stockée dans un environnement utilisateur logiciel.

Une alternative à la protection de la clé symétrique ou privée par un élément matériel a été proposée dans FR 2 937 204 où la clé symétrique est une information dynamique mise à jour de façon systématique et aléatoire ; une attaque par « texte crypté choisi » possible dans un dispositif logiciel conventionnel n'est plus faisable en pratique. Ce procédé est bien adapté à la réalisation de tokens « non-connectés », par exemple une application ou une librairie de génération de mots de passe multi-facteurs à usage unique (OTP). La cible de sécurité d'un token « connecté » est cependant plus stricte du fait de la possibilité, par exemple, d'un malware d'exécuter le mécanisme d'authentification en lieu et place de l'utilisateur autorisé, ou d'effectuer une copie et un envoi à un tiers de la clé privée du token, voire du PIN de l'utilisateur.

Il serait donc souhaitable de disposer d'une solution d'authentification logicielle de faible coût et d'usage aisé, apportant une protection réelle et efficace contre les attaques et vulnérabilités ciblant l'authentification, en particulier pour un token « connecté ». Cette solution permettrait de garantir l'identité de l'utilisateur lors d'un accès, voire de sécuriser une transaction contre une attaque de type « Man in the Browser » si elle était mise en œuvre sur un canal séparé de celui utilisé pour réaliser la transaction.

### Description de invention

Pour résoudre un ou plusieurs des inconvénients ou insuffisances cités précédemment, un procédé d'authentification auprès d'un serveur d'authentification d'un utilisateur ayant à sa disposition un calculateur comprenant
- une zone mémoire pour stocker au moins un identifiant unique propre au calculateur et une première clé secrète (K0) ; et
- un processeur pour au moins calculer une fonction non-inversible (H) ;
comprend :
- l'envoi par le calculateur de son identifiant unique au serveur d'authentification ;
- l'envoi par le serveur d'authentification au calculateur d'une information (challenge) et d'un code d'action ;
- l'envoi par le calculateur au serveur d'authentification :
   - d'un premier résultat (R0) de la fonction non-inversible (H) dépendant de l'information (challenge) reçue du serveur d'authentification, de la première clé secrète (K0) et d'au moins une donnée propre à un élément unique ou quasi-unique du calculateur (SN) ;
   - d'un deuxième résultat (RT) de la fonction non-inversible (H) dépendant du résultat d'un test de Turing passé par l'utilisateur, le test de Turing étant conditionné par le code d'action ; et
   - d'un troisième résultat (R1) de la fonction non-inversible (H) dépendant de l'information (challenge) reçue du serveur d'authentification, de la première clé secrète (K0) et d'une deuxième dé secrète (K1) ;
   - vérification par le serveur d'authentification de la validité de l'identifiant unique et des premier, deuxième et troisième résultat, et authentification de l'utilisateur s'ils sont tous les quatre valides.

Des caractéristiques ou des modes de réalisation particuliers, utilisables seuls ou en combinaison, sont :
- la deuxième clé secrète (K1) est une clé dynamique variant à chaque utilisation du procédé d'authentification, et en ce que, après l'authentification de l'utilisateur, le serveur d'authentification envoie au calculateur une deuxième information (delta) et le calculateur utilise la deuxième information (delta) pour mettre à jour la deuxième clé secrète (K1) ;
- la deuxième dé secrète (K1) n'est pas stockée par le calculateur mais calculée à la volée par celui-ci ;
- à la réception du code d'action par le calculateur, le calculateur présente à l'utilisateur une interface de saisie d'un mot de passe (PIN), et envoie au serveur d'authentification un quatrième résultat (R2) de la fonction non-inversible (H) dépendant de l'information (challenge) reçue du serveur d'authentification, de la première clé secrète (K0) et du mot de passe (PIN), le serveur d'authentification n'authentifiant l'utilisateur qu'après avoir vérifié la validité du quatrième résultat (R2) ;
- la saisie du mot de passe est utilisé comme test de Turing ;
- le premier résultat (R0) est envoyé avant l'exécution de la saisie du mot de passe de sorte que, sur validation du premier résultat (R0), le serveur d'authentification envoie au calculateur une information personnelle de l'utilisateur qui est présentée sur l'interface de saisie du mot de passe ;
- après l'authentification de l'utilisateur, le serveur d'authentification envoie au calculateur une troisième information (défi) puis le calculateur génère un cinquième résultat (OTP) de la fonction non-inversible (H) dépendant de la troisième information (défi), de la première ou de la deuxième clé secrète et d'une troisième clé secrète propre au calculateur et à un service émetteur du calculateur, et le cinquième résultat est envoyé à un serveur de service comme mot de passe à usage unique permettant d'authentifier l'utilisateur auprès du serveur de service ; et/ou
- le service émetteur possédant une clé publique associée à une clé privée, la troisième clé secrète est stockée dans le serveur d'authentification, protégée par la clé publique du service émetteur, la clé privée associée étant stockée de façon non-exportable dans une carte cryptographique.

Ainsi, sans utilisation d'un dispositif matériel particulier, on obtient un haut niveau de sécurité dans l'authentification en combinant des données propre à l'équipement support du calculateur, à l'utilisateur et des données dynamiques.

Dans un second aspect de l'invention, Produit programme d'ordinateur téléchargeable depuis un réseau de communication et/ou enregistré sur un support lisible par ordinateur et/ou exécutable par un processeur, caractérisé en ce qu'il comprend des instructions de code de programme pour la mise en œuvre du procédé d'authentification ci-dessus par un ordinateur associé à l'utilisateur pour jouer le rôle du calculateur.

Des caractéristiques ou des modes de réalisation particuliers, utilisables seuls ou en combinaison, sont :
- il est intégré à un navigateur internet pour fonctionner à l'intérieur de celui-ci ; et/ou
- il est téléchargé par le navigateur internet lorsque celui-ci interagit avec le serveur d'authentification.

### Brève description des figures

L'invention sera mieux comprise à la lecture de la description qui suit, faite uniquement à titre d'exemple, et en référence aux figures en annexe dans lesquelles :
- La figure 1 représente un système en réseau mettant en œuvre un mode de réalisation du procédé de l'invention ; et
- La figure 2 représente un ordinogramme du mode de réalisation mis en œuvre par le système de la figure 1.

### Modes de réalisation

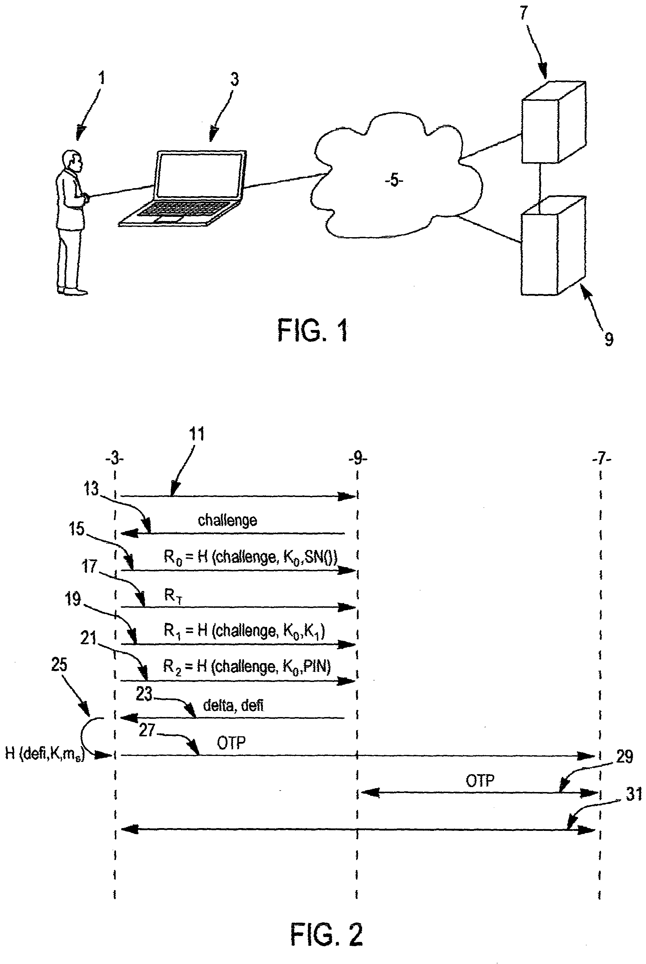

En référence à la figure 1, un utilisateur 1 dispose d'un dispositif informatique 3 connecté à un réseau de données 5 tel qu'internet. Via ce réseau, l'utilisateur veut se connecter à un service offert par un serveur de service 7. Pour donner accès à ce service, le serveur de service a besoin d'authentifier l'utilisateur et utilise un serveur d'authentification 9.

Le dispositif informatique 3 peut être tout dispositif ayant des moyens de calcul, de stockage de données, de communication avec un réseau de données et d'interfaçage avec un utilisateur. Cela peut être un téléphone portable ou un ordinateur personnel, par exemple.

Le dispositif informatique 3 est configuré par logiciel pour jouer le rôle d'un token dans le procédé d'authentification décrit. Aussi, pour faciliter la description qui suit, il sera appelé « token » par la suite.

Dans la figure 2, les étapes du procédé d'authentification sont réparties sur 3 colonnes, chaque colonne représentant un dispositif afin de montrer les flux entre les différents dispositifs.

On suppose tout d'abord que le token 3 implémentant le procédé d'authentification dispose d'un identifiant unique auprès du serveur d'authentification 9. Le procédé n'implique pas une implémentation particulière du serveur d'authentification 9. Il peut notamment s'agir d'un service d'authentification accessible et utilisable en ligne sans connaissance de l'implémentation sous-jacente de ce service. Cet identifiant est de préférence suffisamment long pour que la probabilité de trouver un identifiant valide soit arbitrairement faible.

Le token initie le procédé d'authentification en se connectant au serveur d'authentification et en communiquant son identifiant, étape 11 de la figure 2. De préférence, cette connexion est réalisée grâce à un protocole sécurisé tel que https, et le serveur met en oeuvre un certificat ssl lui permettant d'être authentifié de façon sûre par ses correspondants.

Le serveur répond, étape 13, à cette connexion en fournissant une information challenge et en associant cette information à l'identifiant fourni. Il fournit également un code d'action. Cette réponse est effectuée que l'identifiant fourni corresponde ou non à un identifiant valide afin qu'un attaquant ne puisse déduire de la réponse du serveur si l'identifiant qu'il utilise est ou non valide.

On suppose ensuite que le token implémentant le procédé d'authentification dispose d'une clé symétrique K₀. Le token se connecte de nouveau au serveur et fournit, étape 15, une information R₀ calculée comme valant H(challenge, K₀, SN()) où H est une fonction non-inversible, par exemple une fonction de hachage et SN() une fonction renvoyant des données propres, donc uniques ou quasi-uniques, à l'équipement où le token est instancié et/ou à l'instanciation du token sur cet équipement. Dans le cas d'une implémentation de l'invention où le token est une librairie informatique intégrée dans une application « hôte », une partie des données SN() peuvent être fournies par l'hôte. Par ailleurs, l'homme de l'art saura mettre en œuvre dans une implémentation concrète de l'invention les procédés permettant de compléter les arguments (« padding ») et de tronquer le résultat de la fonction non-inversible autant que rendu nécessaire par les choix d'implémentation. L'emploi combiné d'informations propres à l'équipement - pas nécessairement toujours les mêmes d'un token à l'autre, voire d'une authentification à l'autre - et de données propres à l'instanciation du token sur l'équipement permet de rendre compliquée la copie du token d'un équipement à l'autre mais pour autant ne suffit pas à identifier l'équipement (et encore moins l'utilisateur) de façon fiable, car toutes les informations obtenues par le token via des interfaces logicielles sont susceptibles d'être remplacées à l'insu du token et donc du serveur d'authentification (« spoofing »). Egalement, en cas de compromission du token conduisant à sa révocation, l'équipement n'est réutilisable pour le procédé d'authentification que s'il est possible de mettre en œuvre d'autres informations propres à l'équipement.

Selon la valeur du code d'action reçu du serveur, le token fournit également, étape 17, une information R_{T} liée à un test de Turing passé par l'utilisateur dans une interface présentée par le token. L'objet de ce test est de s'assurer que le procédé d'authentification a été initié par un utilisateur et non par un malware. De nombreuses variantes sont possibles pour ce test, plus ou moins efficaces dans leur capacité de discrimination, ou simples vu de l'utilisateur. L'invention n'en implique pas une en particulier. Il peut s'agir d'un événement matériel difficile à simuler par un malware, de l'identification par l'utilisateur d'une information personnelle parmi plusieurs possibilités plus ou moins similaires qui lui sont présentées, de la saisie d'un « capcha », de la réponse à une question logique posée en langage naturel, etc.

Le token fournit également, étape 19, une information R₁ calculée comme valant H(challenge, K₀, K₁) où K₁ est une clé symétrique propre au token, et est de plus une information dynamique, c'est-à-dire dont la valeur change à chaque utilisation du token selon un procédé qui sera décrit par la suite.

Selon la valeur du code d'action reçu du serveur, le token fournit également, étape 21, une information R₂ calculée comme valant H(challenge, K₀, PIN) où PIN est un mot de passe saisi par l'utilisateur dans une interface présentée par le token. De façon préférentielle, lorsqu'un mot de passe doit être saisi par l'utilisateur, le token présente à l'utilisateur une information personnelle de l'utilisateur fournie par le serveur après une authentification réussie grâce à l'information R₀. Dans une implémentation particulière de l'invention, cette information personnelle de l'utilisateur peut être mise en œuvre pour le test de Turing évoqué précédemment. Dans un autre implémentation particulière, la saisie du PIN peut elle-même être utilisée comme test de Turing, par exemple à l'aide d'un clavier virtuel ou d'un pavé numérique virtuel dont les touches sont disposées de façon aléatoire.

Le token implémente une gestion d'erreur de deux types. Le premier type d'erreur concerne un token ayant un identifiant valide mais dont l'une des informations R₀, R_{T} ou R₁ est incorrecte, soit qu'une des clés symétriques K₀ ou K₁ soit incorrecte, soit que le token ait été exécuté par un malware incapable de passer le test de Turing, soit que l'équipement où est instancié le token ou l'instanciation elle-même ne soient pas conforme à une référence attendue par le serveur (fonction SN() renvoyant une valeur incorrecte).

Le second type d'erreur concerne un token ayant des informations R₀, R_{T} (lorsque le serveur demande via le code d'action à ce qu'elle soit fournie) et R₁ correctes mais dont l'information R₂ est incorrecte, du fait que le PIN saisi par l'utilisateur n'a pas la bonne valeur.

De nombreuses variantes sont possibles quant au mode de gestion précis de ces deux types d'erreur. On peut, par exemple, décider de bloquer un token du fait d'une seule information R₀ ou R₁ incorrecte. On peut également bloquer le PIN si n valeurs consécutives saisies par l'utilisateur sont fausses (la valeur n=3 étant couramment employée). L'intérêt du procédé est qu'un attaquant ne disposant pas du token de l'utilisateur (R₀, R_{T} et R₁ correctes) ne peut pas bloquer le PIN ni l'accès de l'utilisateur. Il est en effet possible de distinguer dans la gestion d'erreur un blocage du token (permettant à l'utilisateur légitime d'en utiliser un autre s'il en dispose) du blocage du PIN (pouvant être ou non commun à plusieurs tokens d'un même utilisateur comme c'est le cas lorsqu'on met en œuvre un « PIN chaining »).

Les fonctionnalités de déblocage (du token, du PIN, d'un autre token), de synchronisation, mais également d'activation initiale du token pour un service, et d'ajout d'un service supplémentaire peuvent s'appuyer directement sur le procédé d'authentification objet de l'invention. Dans ce cas, le token précise dans sa requête initiale l'action souhaitée, et le code d'action fourni par le serveur est étendu au-delà des seules actions possibles liées à la génération d'un OTP, afin de couvrir les autres fonctionnalités du token. En particulier, le token peut afficher ou envoyer un code ou un lien à l'utilisateur afin de lui permettre de réaliser une opération sur un autre token ou sur un autre profil utilisateur ; le token peut également requérir la fourniture d'un code d'activation (ou de déblocage ou d'ajout de service, ou de réinitialisation du mot de passe), ce code ayant par exemple été transmis à l'utilisateur par l'émetteur du token (e.g. le service mettant en œuvre le procédé d'authentification des utilisateurs) ou obtenu par l'utilisateur grâce à un autre token, ou encore obtenu depuis le présent token. Les codes ou liens obtenus depuis les tokens peuvent être affichés ou envoyés grâce à un service de communication (IM, mail, SMS, etc.) dont l'adresse a été préalablement définie et validée par le serveur.

Egalement, de nombreuses variantes sont possibles quant à la fourniture d'un code d'erreur par le serveur à chaque étape. Il est souhaitable minimiser la « surface d'attaque », c'est-à-dire les informations fournies à un attaquant pouvant lui permettre d'améliorer l'efficacité de son attaque. Préférentiellement, un identifiant inconnu ou invalide ne sera pas signalé en réponse à la requête initiale, et le type d'erreur (identifiant invalide, R₀, R_{T} ou R₁ incorrects) ne sera pas précisé de façon à ce que l'attaquant n'ait pas de piste d'amélioration.

Le code d'action peut permettre, comme on l'a vu précédemment, la mise en œuvre d'un test de Turing ou de la saisie du PIN par l'utilisateur. Le code d'action est défini d'une part par la politique du service émetteur du token. Cette politique peut combiner des règles fixes et des règles contextuelles liées, par exempte, au délai écoulé depuis la dernière authentification, à la localisation de l'utilisateur, à l'heure, etc. Le code d'action est d'autre part défini par la gestion d'erreur. A titre d'exemple, le code d'action peut forcer la saisie du PIN par l'utilisateur si l'un des compteurs d'erreur associé au token ou au PIN ne vaut pas zéro, quand bien même la politique du service émetteur du token ne le demanderait pas.

Selon l'implémentation, d'autres informations peuvent être fournies par le serveur à l'une des étapes, telles que l'url du service émetteur du token, des informations permettant à l'utilisateur de distinguer ce service (nom, logo, etc.), des informations concernant le formulaire de la page d'authentification de ce service afin que l'OTP généré par le token ne soit pas fourni à un tiers en cas d'injection html dans la page, l'identifiant de l'utilisateur pour ce service pour lui éviter d'avoir à le ressaisir, des informations contenues dans le profil de l'utilisateur dans le serveur pouvant être insérées dans des champs supplémentaires du formulaire de la page d'authentification précisant, par exemple, des droits spécifiques de l'utilisateur.

Le serveur répond, étape 23, à l'envoi des informations R₀, R_{T}, R₁, R₂ en fournissant une information delta qu'il associe à l'identifiant du token, ainsi qu'une information *défi* si la requête initiale envoyée par le token concerne la génération d'un OTP.

L'information *défi* est utilisée par le token pour calculer, étape 25, localement l'OTP comme valant H(défi, K, mₛ) où K est une clé propre au token (éventuellement K₀ ou K₁) et mₛ est une clé propre au token et au service émetteur du token. On peut ainsi, selon une implémentation de l'invention, utiliser le même token pour plusieurs services utilisant des dés mₛ distinctes. Dans une variante de l'implémentation de la présente invention, mₛ est initialisée par le token lors de l'activation d'un service et protégée lors de sa transmission au serveur d'authentification par la partie publique d'une clé de l'émetteur du token (le service) fournie à la volée par le serveur d'authentification lors de l'activation, elle-même protégée en intégrité par une « clé usine » dont la partie publique est embarquée dans le code du token. Ce mode de protection est utile d'une part pour la transmission initiale de la clé mₛ, mais également pour la protection de cette clé lors de son stockage par le serveur d'authentification, en particulier si celui-ci est un service fourni en ligne. Dans une variante d'implémentation de la présente invention, l'algorithme de validation des OTP est exécuté côté serveur au sein d'une carte cryptographique et la partie privée de la clé de l'émetteur est stockée uniquement dans la carte cryptographique, de façon non exportable.

L'OTP calculé est, étape 27, selon les implémentations, affiché à l'utilisateur ou inséré directement dans le formulaire de la page d'authentification du service. Le service utilise le serveur d'authentification 9, étape 27, pour en vérifier la validité (validité des dés, et conformité du contexte tel que délai, adresse IP identiques vues du service et vu du serveur, localisation de l'utilisateur, créneau horaire, etc.) et le cas échéant, donner l'accès, étape 31, à l'utilisateur ou autoriser une transaction.

L'information delta est utilisée par le token pour mettre à jour la clé K₁, par exemple en calculant K_{1,new} = H(delta, K_{1,old}). Si les informations reçues par le serveur parmi R₀, R_{T} et R₁ sont correctes, le serveur procède à la même opération de mise à jour. Selon la façon dont les erreurs du premier type sont gérées dans l'implémentation, on peut aussi faire diverger la version locale du token et celle du serveur de K₁ en mettant à jour la version serveur lorsque seulement certaines informations reçues par le serveur parmi R₀, R_{T} et R₁ sont correctes, ce qui revient à bloquer le token d'un attaquant. A l'inverse, pour prévenir d'éventuels problèmes de perte de connexion pendant l'authentification, il est possible de conserver côté serveur un historique d'une ou plusieurs valeurs de K₁ et de faire la vérification de R₁ sur les valeurs possibles. Pour ne pas trop abaisser la sécurité du dispositif liée à une clé dynamique, il est préférable de limiter cet historique à une seule valeur. Si la vérification correcte de R₁ est faite avec une valeur de K₁ de l'historique, les valeurs plus récentes sont supprimées.

Dans une variante d'implémentation de la présente invention, K₁ n'est pas une information stockée, mais une information RTK₁ calculée à la volée grâce à une information stockée ou demeurant à un emplacement RTS lui-même calculé à la volée, selon le procédé décrit dans FR 2 974 207. On prévient ainsi la copie de K₁ par un malware, à la fois hors exécution puisque RTS n'est pas disponible et que le token peut ne stocker aucune information dans le système de fichier, mais également pendant l'exécution puisque celle-ci n'est pas réalisable par un malware au-delà du test de Turing lorsqu'il est implémenté.

Dans une variante de l'implémentation, le token est une application résidente d'un équipement de l'utilisateur. Il propose des interfaces de saisie et d'affichage à l'utilisateur, notamment une liste des services auxquels il permet de s'authentifier, la saisie du PIN, l'affichage de l'OTP calculé.

Dans une variante de l'implémentation, le token est un logiciel installé dans un navigateur web (« extension »), le token peut ainsi interagir directement avec la page d'authentification du service et automatiser la connexion et l'identification au service. Dans cette implémentation, si l'identifiant (« login ») de l'utilisateur pour le service n'est pas fourni par le serveur, l'utilisateur peut le saisir lui-même dans l'interface du token, et le token peut le mémoriser pour éviter une ressaisie lors d'un usage ultérieur.

Dans une variante de l'implémentation, le token est composé à la fois d'une extension d'un navigateur permettant d'interagir avec la page d'authentification du service et d'une application résidente de la machine agissante comme serveur local gérant un dialogue avec cette page au travers de l'extension. Dans cette variante, il est possible de doter le token de fonctions de communication avec les pages web des services, afin que celles-ci puissent adapter le contenu qu'elles présentent aux utilisateurs selon par exemple qu'un token est présent ou non, activé ou non, bloqué ou non.

Dans une variante de l'implémentation, le token n'est pas installé sur l'équipement de l'utilisateur, seules les informations propres au token (identifiant, K₀, K₁, mₛ) y sont, dans le contexte du navigateur. Le procédé d'authentification est implémenté dans un script fourni en ligne depuis un domaine protégé par certificat, domaine dans lequel se situe également le serveur, et depuis lequel les échanges avec le token ont lieu. Cette implémentation permet d'empêcher tout accès d'un serveur ou d'une page tierce aux informations propres au token. Ce script est appelé par la page d'authentification du service. Enfin, le script n'est fourni à l'utilisateur que si le service l'appelant est autorisé à utiliser le serveur d'authentification. Dans cette implémentation, il est possible de créer une page web de SSO ('single sign-on') fournie par le domaine protégé par certificat afin de présenter à l'utilisateur l'ensemble des services dont il dispose et auxquels il peut se connecter et s'authentifier grâce au token.

Dans une autre variante de l'implémentation, le token est implémenté dans un script fourni en ligne et une extension du navigateur permet d'interagir avec la page d'authentification. Cette implémentation permet que la fonction SN() renvoie des informations qui ne sont pas stockées dans le contexte du navigateur, que l'emplacement RTS fasse référence à des informations ne demeurant pas dans le contexte du navigateur, et permet enfin d'interagir avec des pages d'authentification de services sans que ceux-ci n'appellent le script, celui-ci pouvant alors être directement appelé par l'extension.

Dans une variante d'implémentation de l'invention, le token gère le profil de plusieurs utilisateurs. Cette gestion est tout d'abord manuelle (sélection par l'utilisateur du profil lui correspondant). La gestion peut être rendue intelligente, c'est-à-dire présenter directement à l'utilisateur le ou les profils activés pour ce service.

L'invention a été illustrée et décrite en détail dans les dessins et la description précédente. Celle-ci doit être considérée comme illustrative et donnée à titre d'exemple et non comme limitant l'invention a cette seule description. De nombreuses variantes de réalisation sont possibles.

Dans les revendications, le mot « comprenant » n'exclue pas d'autres éléments et l'article indéfini « un/une » n'exclue pas une pluralité

## Revendications

1. Procédé d'authentification auprès d'un serveur d'authentification d'un utilisateur ayant à sa disposition un calculateur comprenant
• une zone mémoire pour stocker au moins un identifiant unique propre au calculateur et une première clé secrète (K0) ; et
• un processeur pour au moins calculer une fonction non-inversible (H);
le procédé comprenant :
• l'envoi par le calculateur de son identifiant unique au serveur d'authentification ;
• l'envoi par le serveur d'authentification au calculateur d'une information (challenge) et d'un code d'action ;
• l'envoi par le calculateur au serveur d'authentification :
• d'un premier résultat (R0) de la fonction non-inversible (H) dépendant de l'information (challenge) reçue du serveur d'authentification, de la première clé secrète (K0) et d'au moins une donnée propre à un élément unique ou quasi-unique du calculateur (SN) ;
• d'un deuxième résultat (RT) de la fonction non-inversible (H) dépendant du résultat d'un test de Turing passé par l'utilisateur, le test de Turing étant conditionné par le code d'action ; et
• d'un troisième résultat (R1) de la fonction non-inversible (H) dépendant de l'information (challenge) reçue du serveur d'authentification, de la première clé secrète (K0) et d'une deuxième clé secrète (K1) ;
• vérification par le serveur d'authentification de la validité de l'identifiant unique et des premier, deuxième et troisième résultat, et authentification de l'utilisateur s'ils sont tous les quatre valides.

2. Procédé selon la revendication 1, **caractérisé en ce que** la deuxième clé secrète (K1) est une clé dynamique variant à chaque utilisation du procédé d'authentification, et **en ce que**, après l'authentification de l'utilisateur, le serveur d'authentification envoie au calculateur une deuxième information (delta) et le calculateur utilise la deuxième information (delta) pour mettre à jour la deuxième clé secrète (K1).

3. Procédé selon la revendication 2, **caractérisé en ce que** la deuxième clé secrète (K1) n'est pas stockée par le calculateur mais calculée à la volée par celui-ci.

4. Procédé selon l'une quelconque des revendications précédentes, **caractérisé en ce que**, à la réception du code d'action par le calculateur, le calculateur présente à l'utilisateur une interface de saisie d'un mot de passe (PIN), et envoie au serveur d'authentification un quatrième résultat (R2) de la fonction non-inversible (H) dépendant de l'information (challenge) reçue du serveur d'authentification, de la première clé secrète (K0) et du mot de passe (PIN), le serveur d'authentification n'authentifiant l'utilisateur qu'après avoir vérifié la validité du quatrième résultat (R2).

5. Procédé selon la revendication 4, **caractérisé en ce que** la saisie du mot de passe est utilisé comme test de Turing.

6. Procédé selon la revendication 4 ou 5, **caractérisé en ce que** le premier résultat (R0) est envoyé avant l'exécution de la saisie du mot de passe de sorte que, sur validation du premier résultat (R0), le serveur d'authentification envoie au calculateur une information personnelle de l'utilisateur qui est présentée sur l'interface de saisie du mot de passe.

7. Procédé selon l'une quelconque des revendications précédentes, **caractérisé en ce que**, après l'authentification de l'utilisateur, le serveur d'authentification envoie au calculateur une troisième information (défi) puis le calculateur génère un cinquième résultat (OTP) de la fonction non-inversible (H) dépendant de la troisième information (défi), de la première ou de la deuxième clé secrète et d'une troisième clé secrète propre au calculateur et à un service émetteur du calculateur, et le cinquième résultat est envoyé à un serveur de service comme mot de passe à usage unique permettant d'authentifier l'utilisateur auprès du serveur de service.

8. Procédé selon la revendication 7, **caractérisé en ce que**, le service émetteur possédant une clé publique associée à une clé privée, la troisième clé secrète est stockée dans le serveur d'authentification, protégée par la clé publique du service émetteur, la clé privée associée étant stockée de façon non-exportable dans une carte cryptographique.

9. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en œuvre du procédé d'authentification par un ordinateur associé à l'utilisateur pour jouer le rôle du calculateur selon l'une au moins des revendications 1 à 8.

10. Produit programme d'ordinateur selon la revendication 9, **caractérisé en ce qu'**il est intégré à un navigateur internet pour fonctionner à l'intérieur de celui-ci.

11. Produit programme d'ordinateur selon la revendication 10, **caractérisé en ce qu'**il est téléchargé par le navigateur internet lorsque celui-ci interagit avec le serveur d'authentification.

## Patentansprüche

1. Verfahren zum Authentifizieren, bei einem Authentifizierungsserver, eines Benutzers, der einen Rechner zu seiner Verfügung hat, welcher umfasst
- einen Speicherbereich, um mindestens eine eindeutige Kennung, die dem Rechner eigen ist, und einen ersten geheimen Schlüssel (K0) zu speichern; und
- einen Prozessor, um mindestens eine nicht umkehrbare Funktion (H) zu berechnen;
wobei das Verfahren umfasst:
- das Senden seiner eindeutigen Kennung durch den Rechner an den Authentifizierungsserver;
- das Senden einer Information (Challenge) und eines Aktionscodes durch den Authentifizierungsserver an den Rechner;
- das Senden, durch den Rechner an den Authentifizierungsserver:
-- eines ersten Ergebnisses (R0) der nicht umkehrbaren Funktion (H) in Abhängigkeit von der vom Authentifizierungsserver empfangenen Information (Challenge), dem ersten geheimen Schlüssel (K0) und von mindestens einer Dateneinheit, die einem eindeutigen oder quasi-eindeutigen Element des Rechners (SN) eigen ist;
-- eines zweiten Ergebnisses (RT) der nicht umkehrbaren Funktion (H) in Abhängigkeit vom Ergebnis eines vom Benutzer absolvierten Turing-Tests, wobei der Turing-Test durch den Aktionscode bedingt ist; und
-- eines dritten Ergebnisses (R1) der nicht umkehrbaren Funktion (H) in Abhängigkeit von der vom Authentifizierungsserver empfangenen Information (Challenge), dem ersten geheimen Schlüssel (K0) und von einem zweiten geheimen Schlüssel (K1);
- Verifizieren der Validität der eindeutigen Kennung und des ersten, zweiten und dritten Ergebnisses durch den Authentifizierungsserver, und Authentifizieren des Benutzers, wenn sie alle vier valide sind.

2. Verfahren nach Anspruch 1, **dadurch gekennzeichnet, dass** der zweite geheime Schlüssel (K1) ein dynamischer Schlüssel ist, der bei jeder Verwendung des Authentifizierungsverfahrens variiert, und dadurch, dass nach der Authentifizierung des Benutzers der Authentifizierungsserver eine zweite Information (Delta) an den Rechner sendet, und der Rechner die zweite Information (Delta) verwendet, um den zweiten geheimen Schlüssel (K1) zu aktualisieren.

3. Verfahren nach Anspruch 2, **dadurch gekennzeichnet, dass** der zweite geheime Schlüssel (K1) nicht vom Rechner gespeichert, sondern von demselben im Flug berechnet wird.

4. Verfahren nach einem der vorstehenden Ansprüche, **dadurch gekennzeichnet, dass** beim Empfang des Aktionscodes durch den Rechner der Rechner dem Benutzer eine Schnittstelle zum Eingeben eines Kennworts (PIN) präsentiert und ein viertes Ergebnis (R2) der nicht umkehrbaren Funktion (H) in Abhängigkeit von der vom Authentifizierungsserver empfangenen Information (Challenge), vom ersten geheimen Schlüssel (K0) und vom Kennwort (PIN) an den Authentifizierungsserver sendet, wobei der Authentifizierungsserver den Benutzer erst authentifiziert, nachdem er die Validität des vierten Ergebnisses (R2) verifiziert hat.

5. Verfahren nach Anspruch 4, **dadurch gekennzeichnet, dass** die Eingabe des Kennworts als Turing-Test verwendet wird.

6. Verfahren nach Anspruch 4 oder 5, **dadurch gekennzeichnet, dass** das erste Ergebnis (R0) vor dem Ausführen der Eingabe des Kennworts gesendet wird, derart, dass auf Validierung des ersten Ergebnisses (R0) hin der Authentifizierungsserver eine persönliche Information des Benutzers an den Rechner sendet, die auf der Schnittstelle zur Eingabe des Kennworts präsentiert wird.

7. Verfahren nach einem der vorstehenden Ansprüche, **dadurch gekennzeichnet, dass** der Authentifizierungsserver nach der Authentifizierung des Benutzers eine dritte Information (Herausforderung) an den Rechner sendet, anschließend der Rechner ein fünftes Ergebnis (OTP) der nicht umkehrbaren Funktion (H) in Abhängigkeit von der dritten Information (Herausforderung), dem ersten oder dem zweiten geheimen Schlüssel und von einem dritten geheimen Schlüssel, der dem Rechner und einem ausstellenden Dienst des Rechners eigen ist, generiert, und das fünfte Ergebnis als einmalig verwendbares Kennwort, das es ermöglicht, den Benutzer beim Dienstserver zu authentifizieren, an einen Dienstserver gesendet wird.

8. Verfahren nach Anspruch 7, **dadurch gekennzeichnet, dass**, wenn der ausstellende Dienst einen öffentlichen Schlüssel besitzt, der mit einem privaten Schlüssel assoziiert ist, der dritte geheime Schlüssel durch den öffentlichen Schlüssel des ausstellenden Dienstes geschützt im Authentifizierungsserver gespeichert wird, wobei der assoziierte private Schlüssel in nicht exportierbarer Weise in einer kryptographischen Karte gespeichert wird.

9. Computerprogrammprodukt, das aus einem Kommunikationsnetz heruntergeladen werden kann und/oder auf einem computerlesbaren Träger aufgezeichnet ist und/oder von einem Prozessor ausgeführt werden kann, **dadurch gekennzeichnet, dass** es Programmcodeanweisungen für die Umsetzung des Authentifizierungsverfahrens durch einen mit dem Benutzer assoziierten Computer umfasst, um die Rolle des Rechners nach mindestens einem der Ansprüche 1 bis 8 zu spielen.

10. Computerprogrammprodukt nach Anspruch 9, **dadurch gekennzeichnet, dass** es in einen Internetbrowser integriert ist, um im Inneren desselben zu laufen.

11. Computerprogrammprodukt nach Anspruch 10, **dadurch gekennzeichnet, dass** es vom Internetbrowser heruntergeladen wird, wenn derselbe mit dem Authentifizierungsserver interagiert.

## Claims

1. Method for authenticating, in an authentication server, a user having at his/her disposal a calculator comprising
- a memory zone for storing at least one unique identifier specific to the calculator and a first secret key (K0); and
- a processor for at least calculating a non-invertible function (H);
the method comprising:
- the calculator sending its unique identifier to the authentication server;
- the authentication server sending to the calculator a piece of information (challenge) and an action code;
- the calculator sending to the authentication server:
-- a first result (R0) of the non-invertible function (H) depending on the piece of information (challenge) received from the authentication server, on the first secret key (K0) and on at least one piece of data specific to a unique or quasi-unique element of the calculator (SN);
-- a second result (RT) of the non-invertible function (H) depending on the result of a Turing test passed by the user, the Turing test being conditioned by the action code; and
-- a third result (R1) of the non-invertible function (H) depending on the piece of information (challenge) received from the authentication server, on the first secret key (K0) and on a second secret key (K1) ;
- the authentication server verifying the validity of the unique identifier and of the first, second and third result, and the authentication of the user if all four of them are valid.

2. Method according to claim 1, **characterised in that** the second secret key (K1) is a dynamic key varying upon each use of the authentication method, and **in that**, after the authentication of the user, the authentication server sends to the calculator a second piece of information (delta) and the calculator uses the second piece of information (delta) to update the second secret key (K1).

3. Method according to claim 2, **characterised in that** the second secret key (K1) is not stored by the calculator but calculated on the fly by the latter.

4. Method according to any one of the previous claims, **characterised in that**, upon reception of the action code by the calculator, the calculator presents the user with an interface for inputting a password (PIN), and sends to the authentication server a fourth result (R2) of the non-invertible function (H) depending on the piece of information (challenge) received from the authentication server, on the first secret key (K0) and on the password (PIN), the authentication server only authenticating the user after having verified the validity of the fourth result (R2) .

5. Method according to claim 4, **characterised in that** the input of the password is used as a Turing test.

6. Method according to claim 4 or 5, **characterised in that** the first result (R0) is sent before the execution of the input of the password so that, upon validation of the first result (R0), the authentication server sends to the calculator a piece of personal information of the user that is presented on the interface for inputting the password.

7. Method according to any one of the previous claims, **characterised in that**, after the authentication of the user, the authentication server sends to the calculator a third piece of information (challenge), then the calculator generates a fifth result (OTP) of the non-invertible function (H) depending on the third piece of information (challenge), on the first or on the second secret key and on a third secret key specific to the calculator and to an emitter service of the calculator, and the fifth result is sent to a service server as a single-use password allowing to authenticate the user in the service server.

8. Method according to claim 7, **characterised in that**, the emitter service having a public key associated with a private key, the third secret key is stored in the authentication server, protected by the public key of the emitter service, the associated private key being stored in a non-exportable manner in a cryptographic card.

9. Computer program product downloadable from a communication network and/or recorded on a medium that is readable by a computer and/or executable by a processor, **characterised in that** it comprises program code instructions for the implementation of the authentication method by a computer associated with the user to act as the calculator according to at least one of claims 1 to 8.

10. Computer program product according to claim 9, **characterised in that** it is integrated into a web browser to operate inside the latter.

11. Computer program product according to claim 10, **characterised in that** it is downloaded by the web browser when the latter interacts with the authentication server.
